# EUROPÄISCHE PATENTSCHRIFT

(11) **EP 0 643 729 B1**
(45) Veröffentlichungstag und Bekanntmachung des Hinweises auf die Patenterteilung: **11.09.1996**
(21) Anmeldenummer: 93912802.1
(22) Anmeldetag: 27.05.1993
(51) Int. Cl.: C08F 4/60, C08F 10/00

(54) **KATALYSATORSYSTEME ZUR POLYMERISATION VON C2- BIS C10-ALK-1-ENEN**
CATALYST SYSTEMS FOR POLYMERISING C2- TO C10-ALK-1-ENES
SYSTEMES CATALYSEURS DE LA POLYMERISATION D'ALK-1-ENES C2 A C10

(30) Priorität: 03.06.1992 DE 4218201
(43) Veröffentlichungstag der Anmeldung: 22.03.1995
(73) Patentinhaber: BASF Aktiengesellschaft, 67063 Ludwigshafen (DE)
(72) Erfinder: EVERTZ, Kaspar, D-6707 Schifferstadt (DE); SCHLUND, Rueger, D-6800 Mannheim 1 (DE); JUTZI, Peter, D-4800 Bielefeld 1 (DE); MIELING, Ingrid, D-4434 Ochtrup (DE)
(86) Internationale Anmeldenummer: EP9301329
(87) Internationale Veröffentlichungsnummer: WO9324536

(56) Entgegenhaltungen:
- Journal of Organometallic Chemistry, vol. 369, 1989, H. WIESENFELDT et al.: "ansa-Metallocene derivatives. XVII. Racemic and meso diastereomers of group IV metallocene derivatives with symmetrically substituted, dimethylsilanediyl-bridged ligand frameworks. Crystal structure of R,S-Me2Si(3-t-Bu-5-MeC5H2)2ZrCl2", pages 359-370, see the whole document (cited in the application)
- Makromolekulare Chemie: Macromolecular Symposia, vol. 48, August 1991, (Basel, CH), J.A. EWEN et al.: "Metallocene/polypropylene structural relationships: implications on polymerization and stereochemical control mechanisms", pages 253-295, see the whole document (cited in the application)

## Beschreibung

Die vorliegende Erfindung betrifft Katalysatorsysteme zur Polymerisation von C₂- bis C₁₀-Alk-1-enen, enthaltend als aktive Bestandteile
a) einen Metallocenkomplex der allgemeinen Formel I 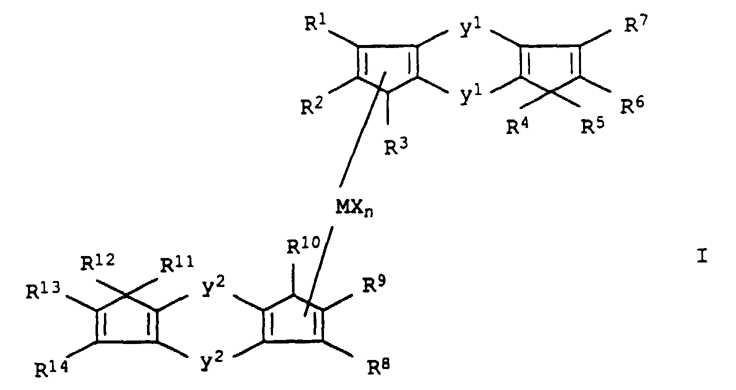 in der die Substituenten und Indices folgende Bedeutung haben:
   - M: ein Metall der III., IV. oder V. Nebengruppe des Periodensystems oder ein Metall aus der Gruppe der Lanthanide,
   - X: Halogen, Wasserstoff, C₁- bis C₁₀-Alkyl, C₃- bis C₁₀-Cycloalkyl, C₆- bis C₁₅-Aryl, Alkylaryl mit 7 bis 15 C-Atomen oder -OR¹⁵,
   - wobei R¹⁵: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
   - n: Wertigkeit von M abzüglich der Zahl Zwei,
   - R¹ bis R¹⁴: Wasserstoff, C₁- bis C₁₀-Alkyl, C₃- bis C₁₀-Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁶)₃,
   - wobei R¹⁶: C₁- bis C₁₀-Alkyl, C₆- bis C₁₅-Aryl oder C₃- bis C₁₀-Cycloalkyl bedeutet,
   - y¹, y²: CH₂, C(R¹⁷)₂, Si(R¹⁷)₂, Ge(R¹⁷)₂ oder Sn(R¹⁷)₂,
   - wobei R¹⁷: C₁- bis C₁₀-Alkyl, C₆- bis C₁₅-Aryl, C₃- bis C₁₀-Cycloalkyl, Alkylaryl oder Si(R¹⁸)₃ bedeutet,
   - wobei R¹⁸: C₁- bis C₁₀-Alkyl, C₆- bis C₁₅-Aryl, C₃- bis C₁₀-Cycloalkyl oder Alkylaryl bedeutet
   sowie
b) eine offenkettige oder cyclische Alumoxanverbindung der allgemeinen Formel II oder III 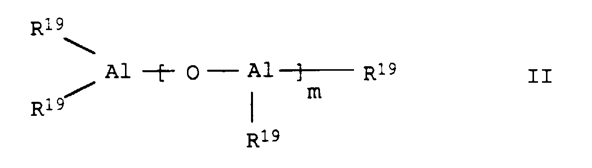 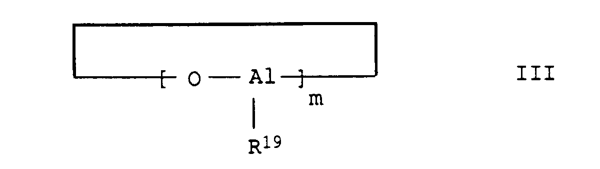
   - wobei R¹⁹: eine C₁- bis C₄-Alkylgruppe bedeutet und m für eine ganze Zahl von 5 bis 30 steht.

Weiterhin betrifft die Erfindung die Verwendung derartiger Katalysatorsysteme zur Herstellung von Polyalk-1-enen, sowie Verfahren zur Herstellung von Polyalk-1-enen mit Hilfe dieser Katalysatorsysteme.

Zahlreiche Beispiele für nicht verbrückte, achirale Metallocenkomplexe sind in Verbindung mit Alumoxanen als Katalysatoren für die Olefinpolymerisation in der Patentliteratur beschrieben, beispielsweise in der EP-A 69 951. Stereoselektive Polymerisationen sind mit diesen Systemen nicht möglich. Auch die Einführung chiraler Substituenten am Cyclopentadienylring induziert keine Stereoselektivitat bei der Polymerisation von Alk-1-enen mit Alumoxan als Cokatalysator.

Aus Makromol. Chem., Macromol. Symp. 48/49 (1991), 253-295, ist bekannt, daß Metallocenkomplexe, die eine Brücke zwischen den Cyclopentadienylringen aufweisen, für stereospezifische Polymerisationen von Alk-1-enen geeignet sind. Allerdings ist die Synthese derartiger Verbindungen aufwendig.

Der vorliegenden Erfindung lag daher die Aufgabe zugrunde, neue Katalysatorsysteme zur Verfügung zu stellen, die für die gleichmäßige Homo- und insbesondere Copolymerisation von Alkenen geeignet sind, die Polymere mit engen Molmassen- und Comonomerenverteilung liefern und prochirale Olefine stereoselektiv polymerisieren können.

Demgemäß wurden die eingangs definierten Katalysatorsysteme zur Herstellung von Polyalk-1-enen gefunden. Außerdem wurden die Verwendung derartiger Katalysatorsysteme zur Herstellung von Polyalk-1-enen, sowie Verfahren zur Herstellung von Polyalk-1-enen mit Hilfe dieser Katalysatorsysteme gefunden.

Die erfindungsgemäßen Katalysatorsysteme enthalten als aktive Bestandteile u.a. eine oder mehrere Komplexverbindungen der allgemeinen Formel I:

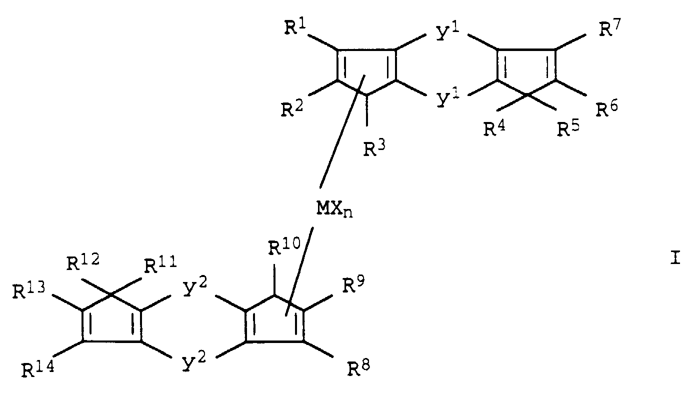

M steht für ein Metall der III., IV. oder V. Nebengruppe des Periodensystems oder ein Metall aus der Gruppe der Lanthaniden, bevorzugt für ein Metall der IV. oder V. Nebengruppe, insbesondere für Titan, Zirkonium oder Hafnium.

X bedeutet ein Halogenatom, bevorzugt Chlor, Wasserstoff, C₁- bis C₁₀-Alkyl, bevorzugt lineare Alkylgruppen mit 1 bis 4 C-Atomen, insbesondere Methyl- oder Ethylgruppen, C₃- bis C₁₀-Cycloalkyl, bevorzugt C₅- und C₆-Cycloalkyl, C₆- bis C₁₅-Aryl, bevorzugt Phenyl, Alkylaryl mit 7 bis 15 C-Atomen, bevorzugt Benzyl oder die Gruppierung -OR¹⁵, wobei R¹⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet.

Die Reste R¹ bis R¹⁴ stehen unabhängig voneinander für vorzugsweise Wasserstoff, C₁- bis C₁₀-Alkyl, bevorzugt C₁- bis C₄-Alkyl, C₃- bis C₁₀-Cycloalkyl, bevorzugt C₅- und C₆-Cycloalkyl, das seinerseits ein C₁- bis C₁₀-Alkyl als Substituent tragen kann, C₆- bis C₁₅-Aryl, bevorzugt Phenyl, oder Arylalkyl, bevorzugt Benzyl. Es können auch zwei benachbarte Reste, also R¹ und R², R² und R³, R⁵ und R⁶ oder R⁶ und R⁷ sowie R⁸ und R⁹, R⁹ und R¹⁰, R¹² und R¹³ oder R¹³ und R¹⁴ gemeinsam für 4 bis 15 C-Atome aufweisende cyclische Gruppen stehen, die auch aromatischen Charakter aufweisen können; bevorzugt ist hierbei, daß zwei benachbarte Reste einen Sechsring bilden.

Weiterhin können die Reste R¹ bis R¹⁴ noch Si(R¹⁶)₃ bedeuten, wobei R¹⁶ für C₁- bis C₁₀-Alkyl, C₆- bis C₁₅-Aryl oder C₃- bis C₁₀-Cycloalkyl steht.

Besonders geeignete Verbindungen der allgemeinen Formel I sind solche, bei denen die Reste R¹ bis R¹⁴ so gewählt sind, daß symmetrische Verbindungen entstehen, d.h. beispielsweise, daß die Reste R¹ und R⁸ gleich sind, ebenso wie R² und R⁹, R³ und R¹⁰ sowie R⁴ und R¹¹, R⁵ und R¹², R⁶ und R¹³ und R⁷ und R¹⁴. Besonders bevorzugte Verbindungen der allgemeinen Formel I sind diejenigen, in denen alle Reste R¹ bis R¹⁴ für Wasserstoff stehen.

Die Substituenten y¹ und y² können gleich oder verschieden sein und stehen für die Gruppierungen CH₂, C(R¹⁷)₂, Si(R¹⁷)₂, Ge(R¹⁷)₂ oder Sn(R¹⁷)₂, wobei Si(R¹⁷)₂ bevorzugt ist. Die Reste R¹⁷ bedeuten C₁- bis C₁₀-Alkyl, vorzugsweise C₁- bis C₄-Alkyl, insbesondere Methyl, C₆- bis C₁₅-Aryl, bevorzugt Phenyl, C₃- bis C₁₀-Cycloalkyl, bevorzugt C₅- bis C₆-Cycloalkyl, Alkylaryl, bevorzugt Benzyl oder Si(R¹⁸)₃, wobei R¹⁸ C₁- bis C₁₀-Alkyl, C₆- bis C₁₅-Aryl oder C₃- bis C₁₀-Cycloalkyl oder Alkylaryl bedeutet.

Die Synthese derartiger Komplexverbindungen kann nach an sich bekannten Methoden erfolgen, wobei die Umsetzung der entsprechenden Liganden mit beispielsweise Butyllithium und anschließender Zugabe von MXₙ₊₂ bevorzugt ist.

Beispiele für entsprechende Herstellungsverfahren sind u.a. im Journal of Organometallic Chemistry, 369 (1989), 359-370 beschrieben.

Die Metallocenkomplexe können auch in kationischer Form vorliegen, wie in der EP-A 277 003 und der EP-A 277 004 beschrieben wird.

Neben den Metallocenkomplexen enthalten die erfindungsgemäßen Katalysatorsysteme noch oligomere Aluminiumoxidverbindungen.

Geeignet sind beispielsweise offenkettige oder cyclische Alumoxanverbindungen der allgemeinen Formel II oder III 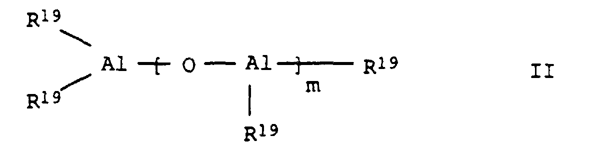 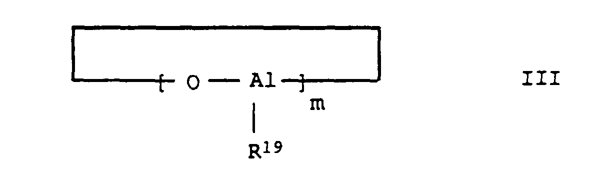
- wobei R¹⁹: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, wenn das atomare Verhältnis zwischen Aluminium aus der oligomeren Aluminiumoxidverbindung und dem Metall M aus dem Metallocenkomplex im Bereich von 10:1 bis 10⁶:1, bevorzugt im Bereich von 10:1 bis 10⁴:1 liegt.

Die Bestandteile der erfindungsgemäßen Katalysatorsysteme können in beliebiger Reihenfolge einzeln oder als Gemisch in den Polymerisationsreaktor eingebracht werden.

Mit Hilfe dieser Katalysatorsysteme lassen sich Polymerisate von Alk-1-enen herstellen. Darunter werden Homo- und Copolymerisate von C₂- bis C₁₀-Alk-1-enen verstanden, wobei als Monomere vorzugsweise Ethylen, Propylen, But-1-en, Pent-1-en und Hex-1-en verwendet werden.

Die Herstellung dieser Polymerisate kann in den üblichen, für die Polymerisation von Alkenen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkessel verwenden kann.

In einer bevorzugten Ausführungsform wird zunächst die oligomere Alumoxanverbindung, bevorzugt als Lösung in einem inerten Lösungsmittel, beispielsweise in Benzol, Toluol, Hexan, Heptan oder deren Mischungen vorgelegt und auf Temperaturen von 20°C bis 80°C erwärmt. Anschließend wird der Metallocenkomplex, der vorzugsweise in einem inerten Lösungsmittel gelöst ist, insbesondere in demjenigen, in dem auch die oligomere Alumoxanverbindung gelöst ist, zugegeben.

Die Polymerisationsbedingungen sind an sich unkritisch, Drücke von 0,5 bis 3000 bar, bevorzugt 1 bis 80 bar und Temperaturen von -50 bis +300°C, bevorzugt -20 bis 100°C haben sich als geeignet erwiesen.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. Polymerisate mit guten anwendungstechnischen Eigenschaften sind auch bei der Polymerisation in der Gasphase, in einer Suspension und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen.

Die erfindungsgemäßen Katalysatorsysteme weisen eine sehr hohe Produktivität auf.

### Beispiele

### Beispiel 1

Herstellung eines Titankomplexes der Formel Ia 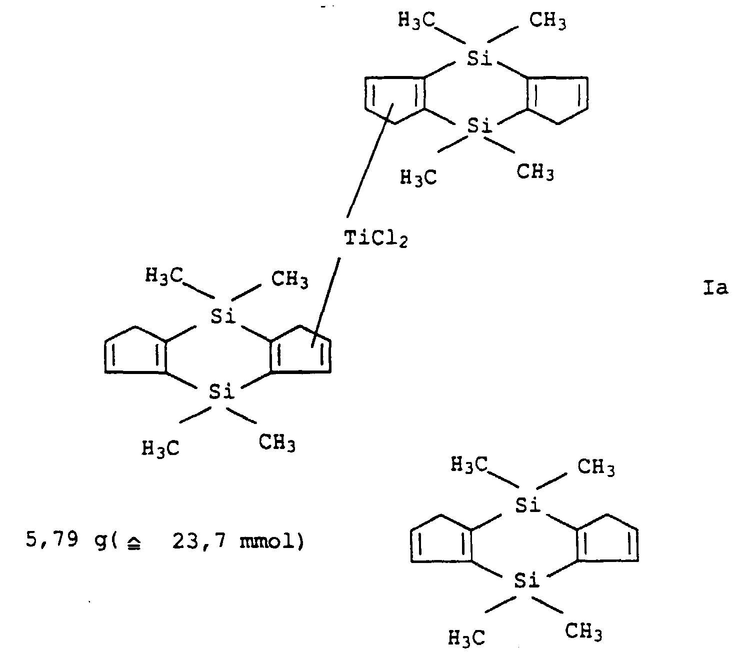 wurden in 150 ml Toluol gelöst und mit 15,0 ml 1,58 molarer n-Butyllithium-Lösung in Hexan (=̂ 23,7 mmol) bei Raumtemperatur versetzt. Zur vollständigen Umsetzung wurde 12 Stunden gerührt. Anschließend tropfte man die hergestellte weiße Suspension langsam bei -100°C zu einer Lösung von 2,25 g (=̂ 11,9 mmol) TiCl₄ in 150 ml Toluol und ließ auf Raumtemperatur erwärmen. Die erhaltene leuchtend rote Lösung wurde vom Ungelösten filtriert, der Rückstand mit Hexan gewaschen (2 x 20 ml) und das Lösungsmittel im Hochvakuum vollständig entfernt. Der Rückstand wurde mit 100 ml Hexan aufgenommen und bei -30°C auskristallisiert. Die leuchtend roten Nadeln wurden isoliert und im Hochvakuum getrocknet.
- Ausbeute:: 3,30 g (=̂ 46 %)
- Schmelzpunkt:: 152°C

Die Substanz war luftstabil und in organischen Lösungsmitteln gut löslich.

### Analysedaten zur Verbindung Ia:

¹H-NMR (CDCl₃): δ = -0,69, 0,38, 0,40, 0,53 (4s, 4x6H, 4xCH₃), 4,85 (br. s, 2H, 2xallyl. H), 6,31 (br. s, 2H, H-5, H-5'), 6,76 (m, 2H, R-11, R-11'), 6,91 (m, 2H, H-12, H-12'), 6,97(br. s, 4H, H-4, H-6, H-4', H-6'), 7,07 (br. s, 2H, H-10, H-10').

¹³C{¹H}-NMR (CDCl₃): δ = -5,58, -1,02, 1,26 (br.; 4xCH₃), 55,94 (allyl. C), 114,86 (vinyl. CH), 131,68 (C-5,C-5'), 133,82 (C-4, C-6, C-4', C-6'), 139,45, 140,09 (vinyl. CH), 142,04 (br., C-3, C-7, C-3', C-7') 144,10 (vinyl. C).

²⁹Si-NMR (CDCl₃):δ = -1,73,-17,47.

MS: m/z (rel.Int.[%]) = 605 (M⁺, 45), 570 ((M-³⁵Cl),26), 361 ((M-(1),100), 326((M-(1)-³⁵Cl),62), 290((M-(1)-2x³⁵Cl),50), 274((M-(1)-2x³⁵Cl-CH₃),12),244((M-(1)-2x³⁵Cl-⁴⁸Ti),22).
- C₂₈H₃₈Cl₂Si₄Ti(605.1): Ber. C 55,52 H 6,28
Gef. C 54,26 H 6,54

### Beispiele 2 bis 5

### Herstellung von Polyethylen (PE) mit Ia

In einem 1-1-Stahlautoklav wurden 450 ml Toluol vorgelegt, auf verschiedene Temperaturen erwärmt und mit 6,15 ml (=̂ 10,26 mmol) Methylalumoxanlösung (MAO) (1,6 molar in Toluol) versetzt. Anschließend wurden 6,16 mg Ia (=̂ 0,0102 mmol Ti) als toluolische Lösung (1 mg/ml) zugegeben. Das atomare Verhältnis zwischen Al aus MAO und Ti aus Ia betrug 1000:1. Dann wurde Ethylen mit verschiedenen Drücken aufgepreßt. Nach einer Polymerisationszeit von 60 Minuten wurde entspannt, das gebildete PE durch Austragen des Toluols mit Wasserdampf vom anhaftenden Lösungsmittel befreit und getrocknet.

Die Versuchsbedingungen sowie die Eigenschaften der entstandenen Polyethylene sind in der Tabelle zusammengestellt.

Der Staudinger-Index [η] wurde bei 135°C in Dekalin bestimmt.

**Tabelle**

| Beispiel | Temperatur [°C] | Druck [bar] | Ausbeute | | [η] [cm³/g] |
|---|---|---|---|---|---|
| | | | [g PE] | [g PE/g Ia] | |
| 2 | 30 | 9 | 1,8 | 290 | 520 |
| 3 | 50 | 9 | 5,9 | 960 | 740 |
| 4 | 80 | 9 | 0,7 | 113 | 230 |
| 5 | 50 | 18 | 7,5 | 1220 | 1110 |

## Patentansprüche

1. Katalysatorsysteme zur Polymerisation von C₂- bis C₁₀-Alk-1-enen, enthaltend als aktive Bestandteile
a) einen Metallocenkomplex der allgemeinen Formel I 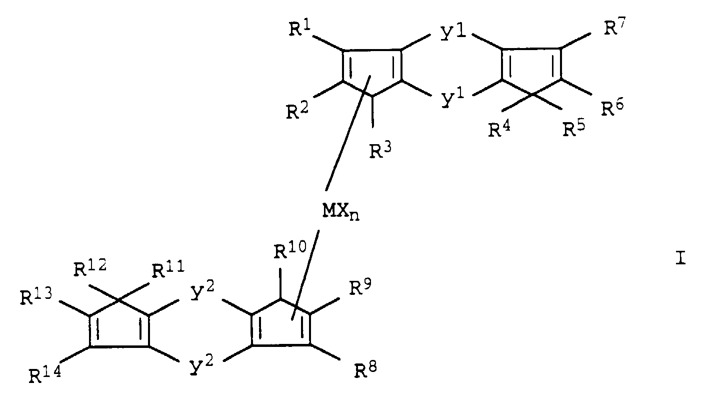 in der die Substituenten und Indices folgende Bedeutung haben:
M ein Metall der III., IV. oder V. Nebengruppe des Periodensystems oder ein Metall aus der Gruppe der Lanthanide,
X Halogen, Wasserstoff, C₁- bis C₁₀-Alkyl, C₃- bis C₁₀-Cycloalkyl, C₆- bis C₁₅-Aryl, Alkylaryl mit 7 bis 15 C-Atomen oder -OR¹⁵,
wobei R¹⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
n Wertigkeit von M abzüglich der Zahl Zwei,
R¹ bis R¹⁴ Wasserstoff, C₁- bis C₁₀-Alkyl, C₃- bis C₁₀-Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁶)₃,
wobei R¹⁶ C₁- bis C₁₀-Alkyl, C₆- bis C₁₅-Aryl oder C₃- bis C₁₀-Cycloalkyl bedeutet,
y¹, y² CH₂, C(R¹⁷)₂, Si(R¹⁷)₂, Ge(R¹⁷)₂ oder Sn(R¹⁷)₂,
wobei R¹⁷ C₁- bis C₁₀-Alkyl, C₆- bis C₁₅-Aryl, C₃- bis C₁₀-Cycloalkyl, Alkylaryl oder Si(R¹⁸)₃ bedeutet,
wobei R¹⁸ C₁- bis C₁₀-Alkyl, C₆- bis C₁₅-Aryl, C₃- bis C₁₀-Cycloalkyl oder Alkylaryl bedeutet
sowie
b) eine offenkettige oder cyclische Alumoxanverbindung der allgemeinen Formel II oder III 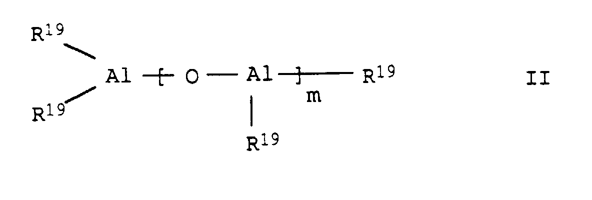 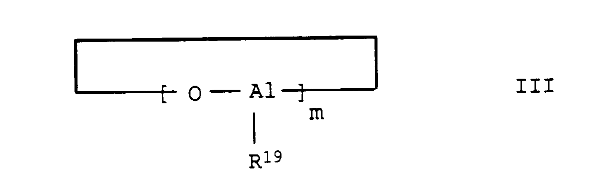
wobei R¹⁹ eine C₁- bis C₄-Alkylgruppe bedeutet und m für eine ganze Zahl von 5 bis 30 steht.

2. Katalysatorsysteme nach Anspruch 1, dadurch gekennzeichnet, daß M für Metalle der IV. Nebengruppe des Periodensystems steht.

3. Katalysatorsysteme nach den Ansprüchen 1 bis 2, dadurch gekennzeichnet, daß y¹ und y² für Si(R¹⁷)₂ stehen.

4. Verwendung der Katalysatorsysteme gemäß den Ansprüchen 1 bis 3 zur Herstellung von Polyalk-1-enen.

5. Verfahren zur Herstellung von Polymerisaten von C₂- bis C₁₀-Alk-1-enen bei Drücken von 0,5 bis 3000 bar und Temperaturen von -50 bis 300°C mit Hilfe eines Katalysatorsystems, dadurch gekennzeichnet, daß man Katalysatorsysteme gemäß den Ansprüchen 1 bis 3 verwendet.

## Claims

1. A catalyst system for the polymerization of C₂-C₁₀-alk-1-enes, containing, as active components,
a) a metallocene complex of the formula I 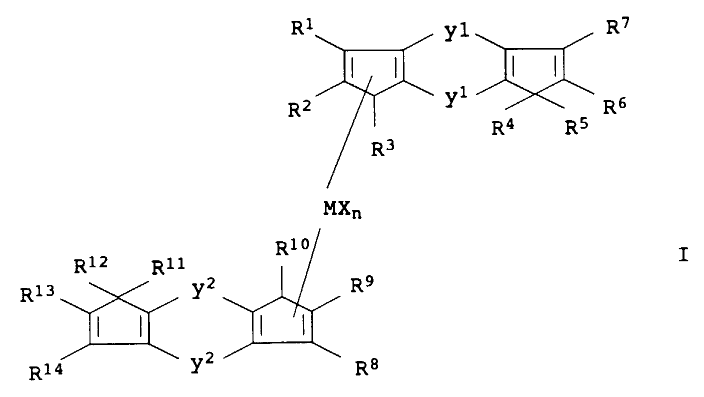 where
M is a metal of subgroup III, IV or V of the Periodic Table of Elements or a metal of the lanthanide group,
X is halogen, hydrogen, C₁-C₁₀-alkyl, C₃-C₁₀-cycloalkyl, C₆-C₁₅-aryl, alkylaryl of 7 to 15 carbon atoms or -OR¹⁵,
R¹⁵ is C₁-C₁₀-alkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
n is the valency of M minus two,
R¹ to R¹⁴ are each hydrogen or C₁-C₁₀-alkyl or are each C₃-C₁₀-cycloalkyl which in turn may carry C₁-C₁₀-alkyl as substituent, or are each C₆-C₁₅-aryl or arylalkyl, where two adjacent radicals together may furthermore form a cyclic group of 4 to 15 carbon atoms, or are each Si(R¹⁶)₃,
R¹⁶ is C₁-C₁₀-alkyl, C₆-C₁₅-aryl or C₃-C₁₀-cycloalkyl,
y¹, y² are each CH₂, C(R¹⁷)₂, Si(R¹⁷)₂, Ge(R¹⁷)₂ or Sn(R¹⁷)₂,
R¹⁷ is C₁-C₁₀-alkyl, C₆-C₁₅-aryl, C₃-C₁₀-cycloalkyl, alkylaryl or Si(R¹⁸)₃ and
R¹⁸ is C₁-C₁₀-alkyl, C₆-C₁₅-aryl, C₃-C₁₀-cycloalkyl or alkylaryl,
and
b) an open-chain or cyclic alumoxane compound of the formula II or III 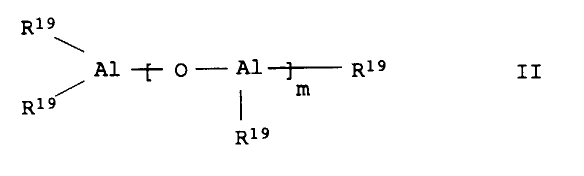 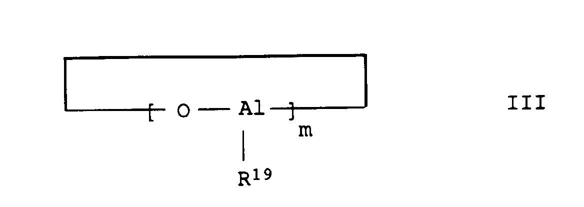
where R¹⁹ is C₁-C₄-alkyl and m is an integer from 5 to 30.

2. A catalyst system as claimed in claim 1, wherein M is a metal of subgroup IV of the Periodic Table of Elements.

3. A catalyst system as claimed in claim 1 or 2, wherein y¹ and y² are each Si(R¹⁷)₂.

4. Use of a catalyst system as claimed in any of claims 1 to 3 for the preparation of polyalk-1-enes.

5. A process for the preparation of polymers of C₂-C₁₀-alk-1-enes at from 0.5 to 3000 bar and from -50 to 300°C with the aid of a catalyst system, wherein a catalyst system as claimed in any of claims 1 to 3 is used.

## Revendications

1. Systèmes catalytiques pour la polymérisation d'alcènes-1 en C₂-C₁₀, contenant en tant que constituants actifs
a) un complexe métallocène de formule générale I 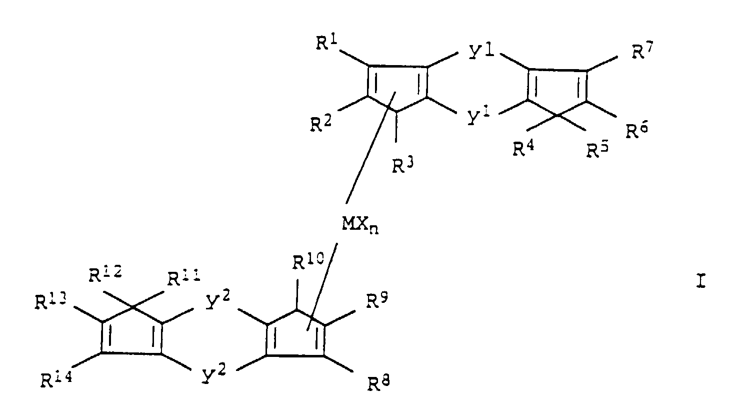 dans laquelle les substituants et les indices ont les significations suivantes:
M métal des groupes IIIB, IVB ou VB de la classification périodique ou métal du groupe des lanthanides,
X atome d'halogène, d'hydrogène ou reste alkyle en C₁-C₁₀, cycloalkyle en C₃-C₁₀, aryle en C₆-C₁₅, alkylaryle à 7-15 atomes de carbone ou -OR¹⁵, R¹⁵ représentant un groupement alkyle en C₁-C₁₀, aryle en C₆-C₁₅, alkylaryle, arylalkyle, fluoroalkyle ou fluoroaryle comportant chaque fois 1 à 10 atomes de carbone dans le reste alkyle et à à 20 atomes de carbone dans le reste aryle,
n valence de M, moins le nombre 2,
R¹ à R¹⁴ atomes d'hydrogène, restes alkyle en C₁-C₁₀, cycloalkyle en C₃-C₁₀ qui peuvent porter de leur côté un groupement alkyle en C₁-C₁₀ comme substituant, aryle en C₆-c₁₅ ou arylalkyle, deux restes voisins pouvant aussi être éventuellement mis ensemble pour des groupements cycliques comportant 4 à 15 atomes de carbone, ou Si(R¹⁶)₃, R¹⁶ représentant un groupement alkyle en C₁-C₁₀, aryle en C₆-C₁₅ ou cycloalkyle en C₃-C₁₀,
y¹,y² CH₂, C(R¹⁷)₂, Si(R¹⁷)₂, Ge(R¹⁷)₂ ou Sn(R¹⁷)₂, R¹⁷ représentant un groupement alkyle en C₁-C₁₀, aryle en C₆-C₁₅, cycloalkyle en C₃-C₁₀, alkylaryle ou Si(R¹⁸)₃,
où R¹⁸ représente un groupement alkyle en C₁-C₁₀, aryle en C₆-C₁₅, cycloalkyle en C₃-C₁₀ ou alkylaryle,
ainsi que
b) un composé alumoxanne en chaîne ouverte ou cyclique de formule générale II ou III 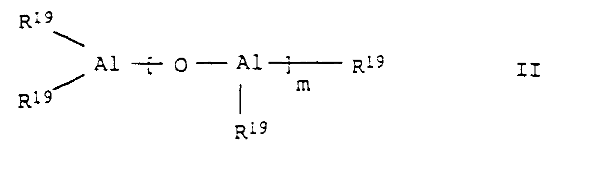 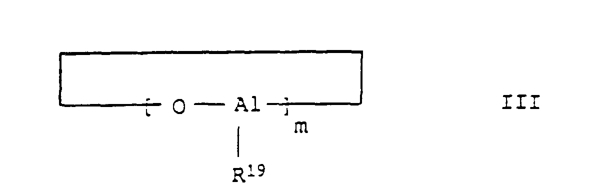
où R¹⁹ représente un groupement alkyle en C₁-C₄ et m est mis pour un nombre entier de 5 à 30.

2. Systèmes catalytiques selon la revendication 1, caractérisés en ce que M est mis pour un métal du groupe IVB de la classification périodique.

3. Systèmes catalytiques selon la revendication 1 ou 2, caractérisés en ce que y¹ et y² sont mis pour des groupements Si(R¹⁷)₂.

4. Utilisation des systèmes catalytiques selon l'une quelconque des revendications 1 à 3 pour la préparation de polyalcènes-1.

5. Procédé de préparation de polymères d'alcènes-1 en C₂-C₁₀ sous des pressions de 0,5 à 3000 bar et à des températures de -50 à 300°C, à l'aide d'un système catalytique, caractérisé en ce que l'on utilise des systèmes catalytiques selon l'une quelconque des revendications 1 à 3.
